# EUROPEAN PATENT SPECIFICATION

(11) **EP 3 418 596 B1**
(45) Date of publication and mention of the grant of the patent: **27.01.2021**
(21) Application number: 16890591.7
(22) Date of filing: 18.03.2016
(51) Int. Cl.: F16C 27/06, B60K 17/22, F16C 35/02, F16F 15/08, B60K 17/24

(54) **CENTER BEARING**
MITTELLAGER
PALIER CENTRAL

(30) Priority: 17.02.2016 JP 2016028178
(43) Date of publication of application: 26.12.2018
(73) Proprietor: IJTT Co., Ltd., Yokohama-shi Kanagawa (JP)
(72) Inventor: HAMANAKA, Yoshihisa, Ebina-shi Kanagawa 243-0434 (JP); KIMURA, Atsushi, Ebina-shi Kanagawa 243-0434 (JP); HATA, Masatoshi, Ebina-shi Kanagawa 243-0434 (JP)
(74) Representative: Schaumburg und Partner Patentanwälte mbB
(86) International application number: PCT/JP2016/058858
(87) International publication number: WO 2017/141451

(56) References cited:
- DE-A1- 3 832 543
- JP-U- S5 329 028
- JP-U- S5 627 124
- JP-U- H02 127 812
- US-A1- 2002 139 603

## Description

### TECHNICAL FIELD

The present invention relates to a center bearing for fastening a propeller shaft to a chassis to support the propeller shaft. More particularly, the present invention relates to a center bearing that supports the propeller shaft in a vibration proofing manner while absorbing a motion of the propeller shaft in a radial direction and also in an axial direction.

### BACKGROUND ART

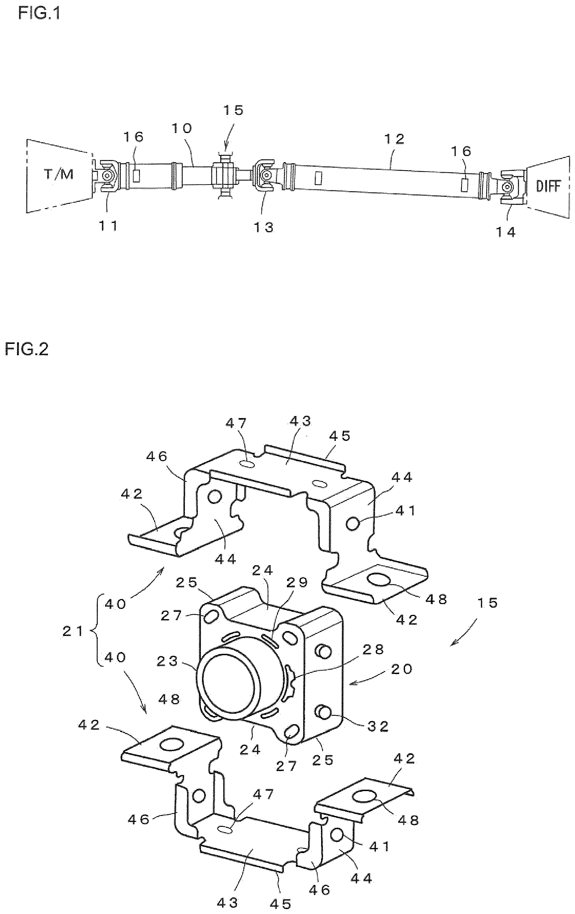

Referring to Fig. 1, a configurational outline of a certain center bearing for supporting a propeller shaft will be described below in detail.

A transmission TM is coupled to a first propeller shaft 10 through a TM side universal joint 11, the first propeller shaft 10 is coupled to a second propeller shaft 12 through an intermediate universal joint 13, and the second propeller shaft 12 is coupled to a differential gear DIFF through a DIFF side universal joint 14. Also, the first propeller shaft 10 is supported by a chassis, which is not shown, with a center bearing 15. It should be noted that a referential sign 16 denotes a balancing weight for adjusting the off-centered centroid or mass eccentricity.

A power transmission from the transmission TM to the differential gear DIFF is performed from the first propeller shaft 10 through the second propeller shaft 12. In this regard, a shaft angle fluctuation between the first propeller shaft 10 and the second propeller shaft 12, which is caused due to an up and down motion of the differential gear DIFF, is absorbed by the respective universal joints 10, 13 and 14.

The differential gear DIFF repeatedly performs the up and down motion and a back and forth fluctuation thereof in response to a reactive force from a roadway surface while a vehicle running. For this reason, the first propeller shaft 10 and the second propeller shaft 12 are thus constantly displaced in the axial direction and also the radial direction.

At this moment, the center bearing 15 performs a function that follows up the motion of the first propeller shaft 10, while fastening the first propeller shaft 10 to the chassis, and also exerts a vibration proofing property which absorbs various kinds of vibrations.

In the meantime, a conventional center bearing includes, as disclosed in Patent Literature Documents 1 and 2, a shaft hole part configured to retain a shaft bearing, the shaft bearing is configured to rotatably support the propeller shaft. The conventional center bearing is configured with a rubber like elastic body configured to deform in a way that the rubber like elastic body follows the displacement in the radial direction and the axial direction, and a bracket configured to retain the rubber like elastic body to the chassis.

The above mentioned rubber like elastic body is rigid (or solid), and has an outer shell which is formed in a U shape. The rubber like elastic body is configured to have a slit which is formed such that the slit is located in an outer circumference of the shaft hole part to penetrate through the rubber like elastic body. By devising a shape or an arrangement of the slit, it is possible to support the propeller shaft while following up the motion of the propeller shaft in the radial direction and also the axial direction, and also to absorb the vibration associated with the up and down motion and the back and forth motion thereof.

### LISTING OF REFERENCES

### PATENT LITERATURES

Patent Literature Document 1: Japanese Patent Application Laid-open Publication No. 2014-219049 A
Patent Literature Document 2: Japanese Patent Application Laid-open Publication No. 2011-79394 A

Document DE 38 32 543 A1 discloses a center bearing for the prop shaft of a vehicle drive. The center bearing comprises a bearing housing, a bearing support body and a rolling bearing inserted into the bearing support body. The bearing housing is designed as a two-part housing. The bearing support body has a plurality of bearing webs projecting in star-like fashion from the bearing ring. Once the top part and the bottom part of the two-part bearing housing have been connected, the bearing ring for the rolling bearing is clamped in the bearing housing with radial pretensioning by means of the bearing webs. By setting the bearing webs at an oblique angle, an axial pretensioning is achieved.

Document US 2002/0139603 A1 discloses a bearing assembly adapted to rotatably support a rotatable shaft relative to a support surface. The bearing assembly comprises a bearing adapted to rotatably support the rotatable shaft, a bracket adapted to be secured to the support surface, and a support member supporting the bearing within the bracket. Further, a piezo-based device is secured to the support member for damping vibrations generated therein.

### SUMMARY OF THE INVENTION

### PROBLEMS TO BE SOLVED BY THE INVENTION

In the meantime, the rubber like elastic body is supported by the bracket in a way that an outer circumferential surface thereof is brought into contact with the bracket. For this reason, the rubber like elastic body necessarily repeats to create a friction against a surface of the bracket, which is a mating member to contact, when an excessive displacement is exerted to the rubber like elastic body in the axial direction or the propeller shaft is being eccentrically rotated. As a result, it entails a problem in which an adhesive friction occurs to adversely cause the rubber like elastic body is thus worn and damaged.

In addition, the conventional rubber like elastic body also entails a problem in which the rubber like elastic body has neither a sufficient deformability nor a sufficient followability with respect to the displacement in the axial direction and a displacement due to an eccentric rotation.

Taking the above mentioned circumstances into account, an object of the present invention is to solve the above mentioned problems and then to provide a center bearing that is capable of preventing the rubber like elastic body from dropping off from the bracket even when an excessive displacement is exerted to the propeller shaft, attaining the vibration proof with absolute accuracy, and also improving the durability.

### SOLUTION TO OVERCOME THE PROBLEMS

In order to achieve the above mentioned object of the present invention, a center bearing according to claim 1 is provided. There is provided a center bearing comprising: a rubber like elastic body having a shaft hole part configured to axially support a propeller shaft; and a bracket configured to retain the rubber like elastic body to a chassis. In the center bearing, the rubber like elastic body is formed in a rectangular shape, at least one concave groove is formed in a center of a side portion of the rubber like elastic body of the rectangular shape, and the bracket is formed in a rectangular shape such that the bracket covers the rubber like elastic body of the rectangular shape.

Preferably, leg side slits may be formed at four corners of the rubber like elastic body.

The concave grooves are formed on upper and lower side portions of the rubber like elastic body, respectively, metal plates are embedded along right and left side portions of the rubber like elastic body, respectively; and slits configured to absorb a displacement in right and left (or horizontal) direction of the propeller shaft are formed between each of the metal plates and the shaft hole part in the rubber like elastic body.

Yet preferably, recessed parts may be formed on front and rear faces in center portions of the right and left side portions of the rubber like elastic body, respectively, and a thickness of the center portions may be formed to be thinner.

Yet preferably, the concave grooves may be formed on the upper and lower side portions and also the right and left side portions of the rubber like elastic body, respectively, and metal plates of an L shape may be embedded at four corners of the rubber like elastic body.

Yet preferably, the bracket may consist of a pair of segmented brackets formed in a squared U shape, leg portions at the four corners of the rubber like elastic body may be supported between reinforcing ribs provided at four corners of the bracket, respectively, and the upper and lower side portions of the rubber like elastic body may be separated from a transverse member of the bracket through the concave grooves, respectively.

Yet preferably, the upper and lower side portions may be formed such that both end portions of the upper and lower side portions have a width identical to a thickness of the rubber like elastic body and center portions of the upper and lower side portions have a width greater than the thickness of the rubber like elastic body.

Yet preferably, the pair of the segmented brackets may be provided with flanges configured to couple both of the segmented brackets together to fasten to a chassis with a bolt and a nut, respectively, the flanges may be formed in a wide squared U shape. Also, reinforcing ribs provided at four corners of the pair of the segmented brackets may be formed in an L shape from both sides of the center portions of segmented longitudinal members of the segmented brackets towards the transverse member configured to support the upper and lower side portions of the rubber like elastic body. And also, reinforcing ribs folded back outwardly may be formed at both sides in a width direction of center portions of the transverse member, respectively.

Yet preferably, boss parts of a concave shape may be formed at joining portions between the center portion of the transverse member and both ends of the transverse member, respectively.

### BRIEF DESCRIPTION OF THE DRAWINGS

Fig. 1 is an explanatory view illustrating an assembly of a center bearing to which an embodiment of the present invention is applied.
Fig. 2 is an exploded view illustrating the center bearing according to the embodiment of the present invention.
Fig. 3 is a front view illustrating a rubber like elastic body of the center bearing according to the embodiment of the present invention.
Fig. 4 is a partial cross sectional side view of Fig. 3.
Fig. 5 is a view illustrating in detail a bracket configured to support the rubber like elastic body, more particularly, Fig. 5(a) is a plain view, Fig. 5(b) is a front view, and Fig. 5(c) is a right side view.
Fig. 6 is a view illustrating a rubber like elastic body of a center bearing according to another embodiment of the present invention, more particularly, Fig. 6(a) is a front view, and Fig. 6(b) is a right side view.
Fig. 7 is a front view illustrating a rubber like elastic body of a center bearing according to yet another embodiment of the present invention.
Fig. 8 is a front view illustrating the rubber like elastic body shown in Fig. 2 in which the rubber like elastic body is assembled to a bracket.
Fig. 9 is a front view illustrating a modification to the bracket shown in Fig. 8.
Fig. 10 is an explanatory view illustrating a displacement of the rubber like elastic body shown in Figs. 8 and 9 in an axial direction.

### MODE FOR CARRYING OUT THE INVENTION

Hereinafter, a preferred embodiment according to the present invention will be described with reference to accompanying drawings.

Referring now to Figs. 2 to 5, a center bearing 15 is configured to comprise a rubber like elastic body 20 which rotatably supports a propeller shaft, and a bracket 21 which supports the rubber like elastic body 20 to fasten the rubber like elastic body 20 to a chassis.

More particularly, in the rubber like elastic body 20, a shaft hole part 23 is formed in the center of a block body 22, which is formed in the rectangular shape. Concave grooves 24 are formed in the center of an upper and lower side portions of the block body 22, respectively, and leg portions 25, which are brought into contact with the bracket 21, are formed at both sides of the concave groove 24, respectively.

Metal plates 26 of a plate shape are embedded in a right and left sides (side portions) of the block body 22 along the right and left sides thereof.

Furthermore, in the rubber like elastic body 20, in order to absorb the vibration transmitted from the propeller shaft, various slits of various shape are formed for adjusting the elastic power.

More particularly, leg side slits 27 of an elongate hole shape are formed at four corners of the block body 22, which are located at the leg portions 25 thereof, respectively. Likewise, right and left slits 28 are formed in the block body 22, which are positioned between the metal plates 26 and the left and right sides of an outer circumference of the shaft hole part 23, respectively. Yet likewise, a pair of upper and lower small slits 29 of an arc shape are formed, respectively, in the block body 22, which are positioned between the upper and lower sides of the outer circumference of the shaft hole part 23 and the concave grooves 24 in the center of the upper and lower sides of the block body 22, respectively.

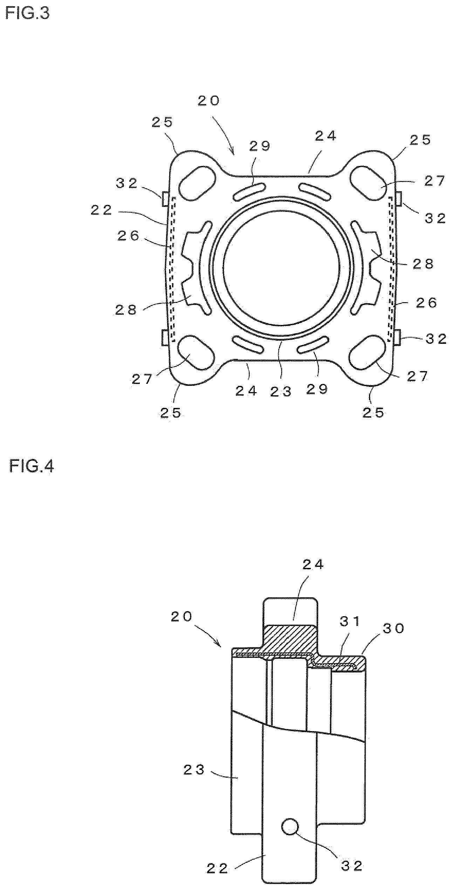

The shaft hole part 23 is configured to have, as shown in Fig. 4, a shaft cylinder part 30 which is formed such that the shaft cylinder part 30 protrudes through a front and rear faces of the block body 22. Also, a metal cylinder 31 for reinforcing is provided inside the shaft cylinder part 30.

The propeller shaft is, although not shown in the drawings, supported by the rubber like elastic body 20 with a bearing provided in the shaft hole part 23 in the rotatable manner.

At the upper and lower portions of the right and left sides of the rubber like elastic body 20, protrusions 32 configured to engage holes 41 provided at the bracket 21, respectively.

The bracket is composed of a pair of upper and lower segmented brackets 40. In the upper and lower segmented brackets 40, flanges 42 of a wide squared U shape (channel shape) are formed, respectively, which couple the both segmented brackets 40 together and secure the segmented brackets 40 to a chassis (not shown) with a bolt and a nut.

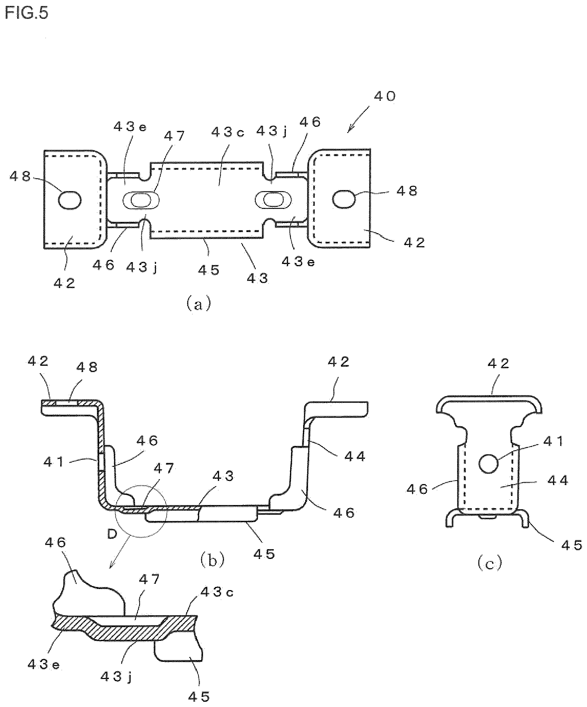

As shown in Figs. 5(a) to 5(c), each of the segmented brackets 40 is configured with a transverse member 43, which supports either of the upper and lower sides of the rubber like elastic body 20, segmented longitudinal members 44 arising upwardly from both ends of the transverse member 43, and the flanges 42 coupled to the segmented longitudinal members 44, respectively.

The transverse member 43 is formed such that a center part 43c of the transverse member 43 has a width greater than the thickness of the rubber like elastic body 20 and both ends 43e thereof has a width identical to the thickness of the rubber like elastic body 20. Each of the segmented longitudinal members 44 is formed such that the segmented longitudinal members 4 have a width identical to the thickness of the rubber like elastic body 20.

Furthermore, the transverse member 43 is provided with reinforcing ribs 45 folded back outwardly at both sides of the center part 43c in the width direction. Likewise, reinforcing ribs 46 of an L shape are provided at a position from both sides of a center portion of the segmented longitudinal members 44 towards the transverse member 43, respectively.

Referring back to the rubber like elastic body 20, leg portions 25 thereof are supported such that each of the leg portions 25 are sandwiched between the reinforcing ribs 46 of the L shape, respectively. The concave groove 24 is formed such that the concave groove 24 has a length substantially similar to the length of the center portion 43c of the transverse member 43.

As shown in Fig. 5(a), joining parts 43j, which join the center part 43c of the transverse member 43 and the both ends 43e, respectively, are located between the reinforcing ribs 45 and the reinforcing ribs 46 of the L shape, respectively. Each of the joining parts 43j is provided with a boss part 47 of the concave shape in order to increase the strength of the joining portion 43j.

Each of the flanges 42 is formed in the squared U shape in a manner that both sides thereof are folded back. Each of the flange 42 is provided with a longitudinal hole 58 through which the segmented brackets 40, 40 are fastened together with a bolt and a nut or the like.

The center bearing 15 is assembled by sandwiching the upper and lower sides of the rubber like elastic body 20 with the segmented brackets 40, respectively, in a state that the propeller shaft is being fitted into the shaft hole part 23 of the rubber like elastic body 20. At this moment, the protrusion 32 of the rubber like elastic body 20 is fitted into a hole 41 which is formed in the segmented longitudinal member 44 of the segmented bracket 40, and the leg portion 25 are engaged and supported between the reinforcing ribs 46 of the L shape.

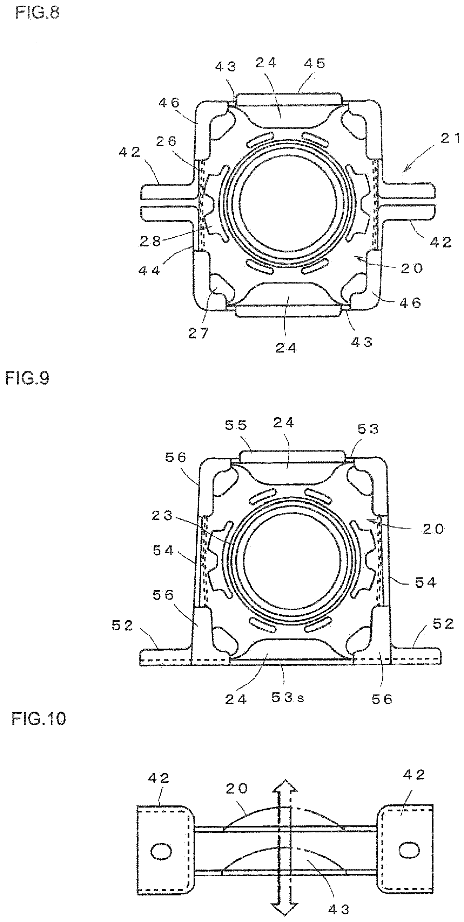

After that, the above assembled one (brackets and the elastic body) is fastened to the chassis with the bolt and the nut through the longitudinal hole 48 in the flange 42 of the segmented bracket 40 so that the center bearing 15 is eventually assembled, as shown in Fig. 8.

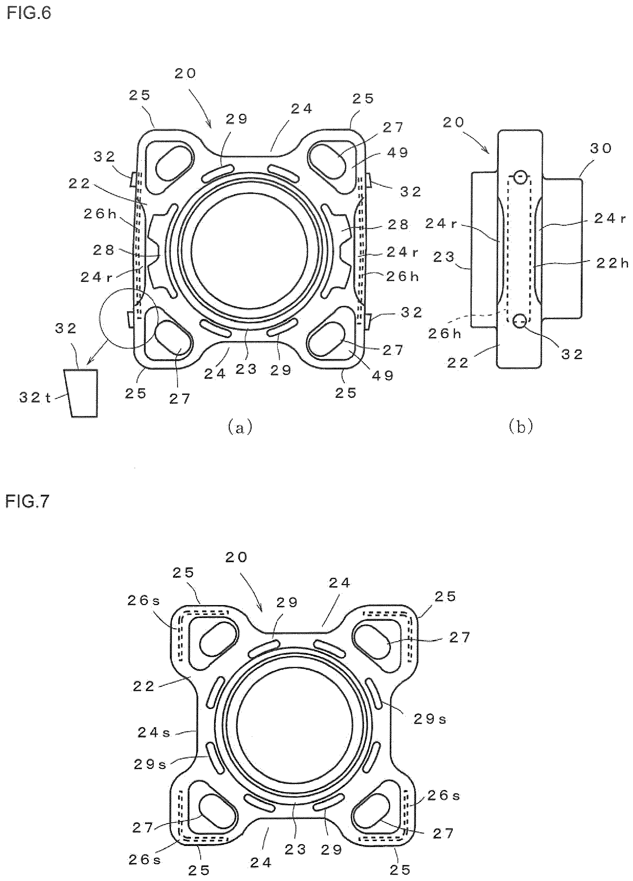

Figs. 6 and 7 respectively illustrate another embodiment of the rubber like elastic body 20.

More particularly, in the rubber like elastic body 20 shown in Figs. 6(a) and 6(b), when the leg side slits 27 of the longitudinal hole shape are formed at the four corners of the block body 22 at which the leg portions 25 are located, leg part grooves 49 are formed at the four corners of the block body 22 in order to adjust the elastic power of the leg parts 25, respectively, and further the leg side slits 27 are formed in the leg part grooves 49, respectively.

Also, referring back to the embodiment shown in Fig. 3, the upper and lower end portions at the right and left sides of the rubber like elastic body 20 are supported between the reinforcing ribs 46 of the L shape at the four corners of the segmented brackets 40, respectively, and also the metal plates 26 are embedded in the right and left sides to constrain the deflection in the up and down (or vertical) direction. On the other hand, according to the present embodiment, recessed parts 24r are formed on the front and rear faces at the right and left sides between the reinforcing ribs 46 of the L shape at both upper and lower sides so that the thickness of a center portion 22h at the right and left sides is made thinner. In addition, the metal plates 26h are formed smaller in compliance with the width of the center portion 22h as well. By doing this, it makes it possible to improve the followability in the vertical direction and also in the axial direction.

Furthermore, when the rubber like elastic body 20 is embedded in the segmented bracket 40, tapered surface 32t are formed in a manner that the surface 32t is tapered in the direction towards the upper and lower sides on apical surfaces of the protrusions 32, respectively. By doing this, it makes it possible to facilitate the engagement of the protrusion 32 into the hole 41 of the segmented longitudinal member 44 when inserted into the hole 41.

Referring now to Fig. 7, concave grooves 24s are also formed at the right and left sides of the block body 22, and metal plates 26s of the L shape are embedded in the leg portions 25 at the four corners. According to the present embodiment, slits provided at the right and left sides of the outer circumference of the shaft hole part 23 are formed as small slits 29s, which are identical to small slits 29 of an arc shape at the upper and lower sides, respectively.

According to the embodiment shown in Fig. 7, the deflection in the vertical direction of the rubber like elastic body 20 is larger as compared to the above embodiment shown in Fig. 6. For this reason, it makes it possible to follow up a large displacement in the axial direction and also to stabilize the followability with respect to the displacement in the vertical direction and the horizontal direction.

Fig. 9 illustrates a modification to the above mentioned bracket 21.

As shown in Figs. 3, 5 and 8, in the above mentioned embodiment, an example is shown in which the bracket 21 is formed with the pair of upper and lower segmented brackets 40. On the other hand, according to the present embodiment shown in Fig. 9, the bracket 21 is formed in a frame shape with a transverse member 53 and longitudinal members 54 to connect the transverse member 53. Also, flanges 52 are formed at an open end side of the longitudinal members 54, respectively, and a detachable transverse member 53s is provided between the flanges 52 so as to constitute the bracket 21. Ribs 56 of the L shape for reinforcing are provided at the corners of the bracket 21, and also a rib 55 is formed in the transverse member 53.

The rubber like elastic body 20 are inserted into the bracket 21 in a state that the transverse member 53s is removed. After then, the transverse member 53s is fitted into the bracket 21, and the transverse member 53s is fastened to the chassis with the bolt and the nut along with the flanges 52 and 52.

Next, an action of the present embodiment will be described below.

As already described referring to Fig. 1, the center bearing undergoes the displacement of the propeller shaft 10 in the axial direction and also the radial direction. However, the rubber like elastic body 20 is retained in the bracket 21 substantially with the leg portions 25 at the four corners thereof so that the displacement in the radial direction and the displacement in the axial direction are both absorbed by the rubber elasticity between the shaft hole part 23 and the leg portion 25. At his moment, it is possible to allow the length of the leg portion 25 to be sufficient.

Most commonly, a diameter of the propeller shaft is 50 to 130 mmϕ. Taking those into consideration, the shaft hole part is formed corresponding to the diameter of the propeller shaft. In this regard, conventionally, an outer diameter of the rubber like elastic body, of which outer shell is formed in the U shape, is formed to be greater with respect to the shaft hole part. However, it entails a problem in which the displacement in the axial direction cannot be absorbed sufficiently.

On the other hand, according to the rubber like elastic body 20 of the present invention, even when the rubber like elastic body 20 is formed in the rectangular shape with the length of the side thereof being 120 to 200 mm, still it makes it possible to allow the length from the shaft hole part 23 to each of the leg portions 25 at the four corners to be longer by approximately 1.4 (√2) times as compared to the conventional one. For this reason, it makes it possible to assure the sufficient elastic deformation length, in spite of the fact that the rubber like elastic body has substantially the same size as the conventional rubber like elastic body.

In addition, with the slit or the concave portion being formed at the right and left sides, it makes it possible to assure the followability in the right and left direction, which is similar to the followability in the upper and lower (vertical) direction. By doing this, it makes is possible to improve the durability in the radial direction and the durability against the rotation as well.

In the meantime, in terms of the displacement in the axial direction, the rubber like elastic body 20 is not directly brought into contact with the transverse member 43, because the concave grooves 24 are formed at the upper and lower sides of the rubber like elastic body 20. For this reason, as shown in Fig. 10, even when the rubber like elastic body 20 is deflected in the axial direction, the adhesive friction is unlikely to occur due to the contact of the transverse member 43 with the upper and lower sides of the rubber like elastic body 20.

Yet in addition, as the metal plates 26 are embedded in the right and left sides of the rubber like elastic body 20, it makes it possible to suppress the deformation at the right and left sides and to support the rubber like elastic body 20 in the bracket 21, when the rubber like elastic body 20 is about to be deformed in the axial direction.

As described above, according to the present invention, the rubber like elastic body 20 is formed in the rectangular shape, the bracket 21, which covers the rubber like elastic body of the rectangular shape, is formed in the rectangular shape as well, the leg portions 25 at the four corners of the rubber like elastic body 20 are supported by the bracket 21, and the concave grooves 24 are provided at least at the upper and lower sides of the rubber like elastic body 20. By doing this, the upper and lower sides of the rubber like elastic body 20 is separated or distant from the transverse member 43 of the bracket 21. As a result, it makes it possible to maintain the durability of the propeller shaft while supporting the propeller shaft without the adhesive friction being caused, even when the excessive displacement in the axial direction is exerted to the propeller shaft.

## Claims

1. A center bearing (15) comprising:
a rubber like elastic body (20) having a shaft hole part (23) configured to axially support a propeller shaft (10); and
a bracket (21) configured to retain the rubber like elastic body (20) to a chassis,
the rubber like elastic body (20) being formed in a rectangular shape, and
the bracket (21) being formed in a rectangular shape such that the bracket (21) covers the rubber like elastic body (20) of the rectangular shape,
**characterized in that** concave grooves (24) are formed at an upper and lower side portions of the rubber like elastic body (20), respectively,
each concave groove is formed in a center of the upper and the lower side portion of the rubber like elastic body, respectively,
metal plates (26) are embedded along a right and left side portions of the rubber like elastic body (20), respectively, and
a slit (28) configured to absorb a displacement in right and left direction of the propeller shaft is formed between each of the metal plates (26) and the shaft hole part (23) in the rubber like elastic body (20).

2. The center bearing (15) according to claim 1, wherein leg side slits (27) are formed at four corners of the rubber like elastic body (20).

3. The center bearing (15) according to claim 1 or 2, wherein recessed parts (24r) are formed on front and rear faces in center portions of the right and left side portions of the rubber like elastic body (20), respectively, and a thickness of the center portions are formed to be thinner.

4. The center bearing (15) according to any one of claims 1 to 3, wherein the bracket consists of a pair of segmented brackets (40) formed in a squared U shape,
leg portions (25) at the four corners of the rubber like elastic body (20) are supported between reinforcing ribs (46) provided at four corners of the bracket (21), respectively, and
the upper and lower side portions of the rubber like elastic body (20) are separated from a transverse member (43) of the bracket (21) through the concave groove (24), respectively.

5. The center bearing (15) according to any one of claims 1 to 3, wherein the upper and lower side portions of the bracket (21) are formed such that both end portions of the upper and lower side portions have a width identical to a thickness of the rubber like elastic body (20) and a center portion of the upper and lower side portions has a width greater than the thickness of the rubber like elastic body (20).

6. The center bearing (15) according to claim 4, wherein the pair of the segmented brackets (40) are provided with flanges (42) configured to couple both of the segmented brackets (40) together to fasten the segmented brackets (40) to a chassis with a bolt and a nut, respectively,
each of the flanges (42) is formed in a wide squared U shape,
reinforcing ribs (46) provided at four corners of the pair of the segmented brackets (40) are formed in an L shape from both sides of the center portion of a segmented longitudinal member (44) of the segmented brackets (40) towards the transverse member (43) configured to support the upper and lower side portions of the rubber like elastic body (20), and
reinforcing ribs (45) folded back outwardly are formed at both sides in a width direction of center portion (43c) of the transverse member (43), respectively.

7. The center bearing (15) according to claim 4, wherein boss parts (47) of a concave shape are formed at joining portions (43j) between the center portions (43c) of the transverse member (43) and both ends of the transverse member (43), respectively.

## Patentansprüche

1. Mittellager (15), umfassend:
einen gummiartigen elastischen Körper (20), der einen Schaftlochteil (23) hat, der ausgebildet ist, um eine Gelenkwelle (10) axial zu tragen; und
eine Klammer (21), die ausgebildet ist, um den gummiartigen elastischen Körper (20) an einem Fahrgestell zu halten,
wobei der gummiartige elastische Körper (20) in einer rechteckigen Form ausgebildet ist, und
wobei die Klammer (21) in einer rechteckigen Form ausgebildet ist, derart, dass die Klammer (21) den gummiartigen elastischen Körper (20) mit der rechteckigen Form abdeckt,
**dadurch gekennzeichnet, dass** konkave Nuten (24) an einem oberen bzw.
einem unteren Seitenabschnitt des gummiartigen elastischen Körpers (20) ausgebildet sind,
jede konkave Nut in einer Mitte des oberen bzw. des unteren Seitenabschnittes des gummiartigen elastischen Körpers ausgebildet ist,
Metallplatten (26) entlang eines rechten bzw. einen linken Seitenabschnittes des gummiartigen elastischen Körpers (20) eingebettet sind, und
ein Schlitz (28), der ausgebildet ist, um eine Verschiebung der Gelenkwelle nach rechts und links zu absorbieren, zwischen jeder der Metallplatten (26) und dem Schaftlochteil (23) in dem gummiartigen elastischen Körper (20) ausgebildet ist.

2. Mittellager (15) nach Anspruch 1, wobei Schenkelseitenschlitze (27) an vier Ecken des gummiartigen elastischen Körpers (20) ausgebildet sind.

3. Mittellager (15) nach Anspruch 1 oder 2, wobei ausgesparte Teile (24r) an einer Vorderfläche bzw. einer Rückfläche in Mittelabschnitten des rechten bzw. des linken Seitenabschnittes des gummiartigen elastischen Körpers (20) ausgebildet sind und eine Dicke der Mittelabschnitte dünner ausgebildet ist.

4. Mittellager (15) nach einem der Ansprüche 1 bis 3, wobei die Klammer aus einem Paar segmentierter Klammern (40) besteht, die in einer viereckigen U-Form ausgebildet sind,
Schenkelabschnitte (25) an den vier Ecken des gummiartigen elastischen Körpers (20) zwischen verstärkenden Rippen (46) getragen werden, die jeweils an vier Ecken der Klammer (21) vorgesehen sind, und
der obere und der untere Seitenabschnitt des gummiartigen elastischen Körpers (20) von einem Querelement (43) der Klammer (21) jeweils durch die konkave Nut (24) getrennt sind.

5. Mittellager (15) nach einem der Ansprüche 1 bis 3, wobei der obere und der untere Seitenabschnitt der Klammer (21) derart geformt sind, dass beide Endabschnitte des oberen und des unteren Seitenabschnitts eine Breite haben, die identisch zu einer Dicke des gummiartigen elastischen Körpers (20) ist, und ein Mittelabschnitt des oberen und des unteren Seitenabschnitts eine Breite hat, die größer als die Dicke des gummiartigen elastischen Körpers (20) ist.

6. Mittellager (15) nach Anspruch 4, wobei das Paar der segmentierten Klammern (40) mit Flanschen (42) versehen ist, die ausgebildet sind, um beide der segmentierten Klammern (40) zusammenzukoppeln, um die segmentierten Klammern (40) an einem Fahrgestell jeweils mit einem Bolzen und einer Nut zu befestigen,
jeder der Flansche (42) in einer breiten viereckigen U-Form ausgebildet ist,
verstärkende Rippen (46), die an vier Ecken des Paares von segmentierten Klammern (40) vorgesehen sind, in einer L-Form von beiden Seiten des Mittelabschnittes eines segmentierten Längselements (44) der segmentieren Klammern (40) in Richtung des Querelements (43) ausgebildet sind, welches ausgebildet ist, um den oberen und den unteren Seitenabschnitt des gummiartigen elastischen Körpers (20) zu tragen, und verstärkende Rippen (45), die nach außen umgeklappt sind, jeweils an beiden Seiten in einer Breitenrichtung des Mittelabschnittes (43c) des Querelements (43) ausgebildet sind.

7. Mittellager (15) nach Anspruch 4, wobei Wulstteile (47) mit einer konkaven Form jeweils an verbindenden Abschnitten (43j) zwischen den Mittelabschnitten (43c) des Querelementes (43) und beiden Enden des Querelements (43) ausgebildet sind.

## Revendications

1. Palier central (15) comprenant :
un corps élastique de type caoutchouc (20) ayant une partie de trou d'arbre (23) configurée pour supporter axialement un arbre de propulsion (10) ; et
un support (21) configuré pour maintenir le corps élastique de type caoutchouc (20) sur un châssis,
le corps élastique de type caoutchouc (20) étant formé en une forme rectangulaire, et
le support (21) étant formé en une forme rectangulaire de telle sorte que le support (21) recouvre le corps élastique de type caoutchouc (20) de la forme rectangulaire,
**caractérisé en ce que** des rainures concaves (24) sont formées respectivement au niveau des parties latérales supérieure et inférieure du corps élastique de type caoutchouc (20),
chaque rainure concave est formée respectivement au centre des parties latérales supérieure et inférieure du corps élastique de type caoutchouc,
des plaques métalliques (26) sont enrobées respectivement le long des parties latérales droite et gauche du corps élastique de type caoutchouc (20), et
une fente (28) configurée pour absorber un déplacement dans la direction droite et gauche de l'arbre de propulsion est formée entre chacune des plaques métalliques (26) et la partie de trou d'arbre (23) dans le corps élastique en caoutchouc (20).

2. Palier central (15) selon la revendication 1, dans lequel des fentes latérales de jambe (27) sont formées aux quatre coins du corps élastique de type caoutchouc (20).

3. Palier central (15) selon la revendication 1 ou 2, dans lequel des parties évidées (24r) sont formées sur des faces avant et arrière dans des parties centrales des parties latérales droite et gauche du corps élastique de type caoutchouc (20), respectivement, et une épaisseur des parties centrales est formée pour être plus mince.

4. Palier central (15) selon l'une quelconque des revendications 1 à 3, dans lequel le support consiste en une paire de supports segmentés (40) formés en forme de U carrée,
des parties de jambe (25) aux quatre coins du corps élastique de type caoutchouc (20) sont supportées entre des nervures de renforcement (46) prévues aux quatre coins du support (21), respectivement, et
les parties latérales supérieure et inférieure du corps élastique de type caoutchouc (20) sont séparées respectivement d'un élément transversal (43) du support (21) à travers la rainure creuse (24).

5. Palier central (15) selon l'une quelconque des revendications 1 à 3, dans lequel les parties latérales supérieure et inférieure du support (21) sont formées de telle sorte que les deux parties d'extrémité des parties latérales supérieure et inférieure ont une largeur identique à une épaisseur du corps élastique de type caoutchouc (20) et une partie centrale des parties latérales supérieure et inférieure a une largeur supérieure à l'épaisseur du corps élastique de type caoutchouc (20).

6. Palier central (15) selon la revendication 4, dans lequel la paire des supports segmentés (40) est pourvue de brides (42) configurées pour coupler les deux supports segmentés (40) ensemble afin de fixer les supports segmentés (40) à un châssis avec un boulon et un écrou, respectivement,
chacune des brides (42) a une forme de U carrée large,
des nervures de renforcement (46) prévues aux quatre coins de la paire des supports segmentés (40) sont formées en forme de L à partir des deux côtés de la partie centrale d'un élément longitudinal segmenté (44) des supports segmentés (40) vers l'élément transversal (43) configuré pour supporter les parties latérales supérieure et inférieure du corps élastique de type caoutchouc (20), et
des nervures de renforcement (45) repliées vers l'extérieur sont formées respectivement des deux côtés dans une direction de largeur de la partie centrale (43c) de l'élément transversal (43).

7. Palier central (15) selon la revendication 4, dans lequel des parties de bossage (47) de forme concave sont formées respectivement au niveau de parties de jonction (43j) entre les parties centrales (43c) de l'élément transversal (43) et les deux extrémités de l'élément transversal (43).
